# EUROPÄISCHE PATENTANMELDUNG

(11) **EP 1 418 098 A2**
(43) Veröffentlichungstag der Anmeldung: **12.05.2004**
(21) Anmeldenummer: 03025315.7
(22) Anmeldetag: 03.11.2003
(51) Int. Cl.: B60S 1/08

(54) **Mobile Arbeitsmaschine mit einem Fahrerschutzdach und einer Scheibenwischeranlage**

(30) Priorität: 08.11.2002 DE 10252079
(71) Anmelder: STILL GMBH, 22113 Hamburg (DE)
(72) Erfinder: Grothe, Wolfgang Heinrich, 21244 Buchholz (DE); Jandke, Oliver, 22958 Kuddelwörde (DE)
(74) Vertreter: Geirhos, Johann

(57) **Zusammenfassung**

Die Erfindung betrifft eine mobile Arbeitsmaschine (1), insbesondere Flurförderzeug, mit einem einen Fahrerarbeitsplatz (3) bildenden Fahrerschutzdach (2), insbesondere Kabine, das mindestens eine Scheibe (6; 8) aufweist, wobei zur Reinigung der Scheibe (6; 8) eine Scheibenwischeranlage (8; 9) vorgesehen ist. Die Aufgabe, ein Flurförderzeug zur Verfügung zu stellen, das hinsichtlich des Verschleißes der Scheibenwischeranlage verbessert ist, wird erfindungsgemäß dadurch gelöst, dass die Scheibenwischeranlage (8; 9) in Abhängigkeit von einem die Anwesenheit einer Bedienperson im Fahrerarbeitsplatz (3) erfassenden Anwesenheitssensor (16) betreibbar ist.

## Beschreibung

Die Erfindung betrifft eine mobile Arbeitsmaschine, insbesondere Flurförderzeug, mit einem einen Fahrerarbeitsplatz bildenden Fahrerschutzdach, insbesondere Kabine, das mindestens eine Scheibe aufweist, wobei zur Reinigung der Scheibe eine Scheibenwischeranlage vorgesehen ist.

Bei als Flurförderzeugen, beispielsweise Gabelstaplern, ausgebildeten mobilen Arbeitsmaschinen ist ein Fahrerschutzdach oder eine Kabine vorgesehen, um die Bedienperson vor Witterungseinflüssen zu schützen. Das Fahrerschutzdach bzw. die Kabine kann hierzu eine Frontscheibe und eine Heckscheibe aufweisen und mit seitlichen Türen versehen sein.

Um die Scheiben für eine befriedigende Durchsicht der Bedienperson ausreichend sauber zu halten, ist an der Frontscheibe und gegebenenfalls an der Heckscheibe jeweils eine Scheibenwischeranlage vorgesehen. Zur Steuerung der entsprechenden Scheibenwischeranlage ist jeweils eine Schaltereinrichtung vorgesehen. Sofern die Bedienperson mittels der Schaltereinrichtung die Scheibenwischeranlage eingeschalten hat, wird die Scheibenwischeranlage betätigt. Verlässt die Bedienperson den Fahrerarbeitsplatz, beispielsweise um die Ladung zu sichern oder Ladung auf einer Palette zu kommissionieren, ist die Scheibenwischeranlage bei Flurförderzeugen des Standes der Technik weiterhin betätigt, wodurch die Scheibenwischeranlage weiterhin läuft und insbesondere der Scheibenwischermotor, das Getriebe und das Wischerblatt einem unnötigen Verschleiß unterliegen.

Der vorliegenden Erfindung liegt die Aufgabe zugrunde, ein Flurförderzeug der eingangs genannten Gattung zur Verfügung zu stellen, das hinsichtlich des Verschleißes der Scheibenwischeranlage verbessert ist.

Diese Aufgabe wird erfindungsgemäß dadurch gelöst, dass die Scheibenwischeranlage in Abhängigkeit von einem die Anwesenheit einer Bedienperson am Fahrerarbeitsplatz erfassenden Anwesenheitssensor betreibbar ist. Erfindungsgemäß wird somit die Scheibenwischeranlage nur betrieben, wenn sich die Bedienperson am Fahrerarbeitsplatz befindet. Verlässt die Bedienperson den Fahrerarbeitsplatz wird ein unnötiger Betrieb der Scheibenwischeranlage verhindert. Hierdurch kann der Verschleiß der Scheibenwischeranlage und insbesondere des Wischerblattes vermindert werden. Durch den zeitlich verringerten Betrieb der Scheibenwischeranlage ist es zudem möglich, den Wischermotor und das Getriebe auf geringere thermische Belastungen sowie auf eine geringere Lebensdauer auszulegen, wodurch die Herstellkosten für die Scheibenwischeranlage verringert werden können.

Zweckmäßigerweise ist die Scheibenwischeranlage in Abhängigkeit von einer Schaltereinrichtung betreibbar. Mittels einer Schaltereinrichtung kann die Bedienperson auf einfache Weise die Scheibenwischeranlage ein- bzw. ausschalten, wobei durch den Anwesenheitssensor ein Betrieb der Scheibenwischeranlage in den Betriebszuständen vermieden wird, in denen sich die Bedienperson nicht am Fahrerarbeitsplatz befindet.

Gemäß einer vorteilhaften Weiterbildung der Erfindung ist die Scheibenwischeranlage in Abhängigkeit von einem Regensensor betreibbar. Durch die Steuerung der Scheibenwischeranlage in Abhängigkeit von dem Signal eines Regensensors und des Anwesenheitssensors kann sichergestellt werden, dass die Scheibenwischeranlage nur bei nasser Scheibe und Anwesenheit der Bedienperson am Fahrerarbeitsplatz betätigt wird. Ein mit hohem Verschleiß des Wischerblattes behafteter und unnötiger Betrieb der Scheibenwischeranlage bei trockener Scheibe kann somit wirkungsvoll vermieden werden.

In einer vorteilhaften Ausführungsform der Erfindung ist eine Steuereinrichtung zur Steuerung der Scheibenwischeranlage vorgesehen, die mit der Schaltereinrichtung und/oder dem Regensensor und/oder dem Anwesenheitssensor in Wirkverbindung steht. In einer Steuereinrichtung können die Signale der Schaltereinrichtung, des Anwesenheitssensors sowie des Regensensors zum Betrieb der Scheibenwischeranlage auf einfache Weise ausgewertet werden.

Bei einer Steuerung der Scheibenwischeranlage in Abhängigkeit von der Schaltereinrichtung und von dem Anwesenheitssensor ist die Steuereinrichtung mit Vorteil derart ausgeführt, dass bei einem Einschaltsignal der Schaltereinrichtung und einem die Anwesenheit der Bedienperson meldenden Signal des Anwesenheitssensor die Scheibenwischeranlage betreibbar ist. Es wird somit auf einfache Weise sichergestellt, dass nur bei eingeschalteter Schaltereinrichtung und am Fahrerarbeitsplatz befindlicher Bedienperson die Scheibenwischeranlage betätigt wird.

Sofern die Scheibenwischeranlage in Abhängigkeit von dem Anwesenheitssensor und dem Regensensor betätigt wird, ist die Steuereinrichtung zweckmäßigerweise derart ausgeführt ist, dass bei einem die Anwesenheit der Bedienperson meldenden Signal des Anwesenheitssensor und einem Feuchtigkeit auf der Scheibe meldenden Signal des Regensensors die Scheibenwischeranlage betreibbar ist. Hierdurch wird sichergestellt, dass die Scheibenwischeranlage nur bei nasser Scheibe und am Fahrerarbeitsplatz befindlicher Bedienperson betätigt wird. Ein unnötiger und verschleißbehafteter Betrieb der Scheibenwischeranlage bei trockener Scheibe, beispielsweise bei zufällig betätigter Schaltereinrichtung, kann hierdurch wirkungsvoll vermieden werden.

Besondere Vorteile ergeben sich, wenn gemäß einer Ausführungsform der Erfindung der Anwesenheitssensor als ein die Anwesenheit der Bedienperson auf einem Fahrersitz erfassender Sitzbelegungssensor ausgebildet ist. Mit einem Sitzbelegungssensor kann die Anwesenheit der Bedienperson am Fahrerarbeitsplatz auf einfache Weise erfasst werden. Bei elektrisch betriebenen Gegengewichtsgabelstaplern, bei denen ein Sitzbelegungssensor für den Betrieb erforderlich ist, kann somit eine erfindungsgemäße Steuerung der Scheibenwischeranlage ohne zusätzlichen Sensor erzielt werden, wodurch der Verschleiß der Scheibenwischeranlage mit geringen zusätzliche Kosten erzielt werden kann.

Sofern der Anwesenheitssensor gemäß einer Ausgestaltungsform der Erfindung als Sitzschalter ausgebildet ist, kann auf einfache Weise ein Betrieb der Scheibenwischeranlage bei eingeschalteter Schaltereinrichtung und auf dem Fahrersitz befindlicher Bedienperson erzielt werden, wenn gemäß einer vorteilhaften Ausführungsform der Erfindung der Sitzschalter und die Schaltereinrichtung in Reihe angeordnet sind.

Weitere Vorteile und Einzelheiten der Erfindung werden anhand des in den schematischen Figuren dargestellten Ausführungsbeispiels näher erläutert. Hierbei zeigt
Figur 1 ein erfindungsgemäßes Flurförderzeug,
Figur 2 eine erste Ausführungsform und
Figur 3 eine zweite Ausführungsform der Erfindung.

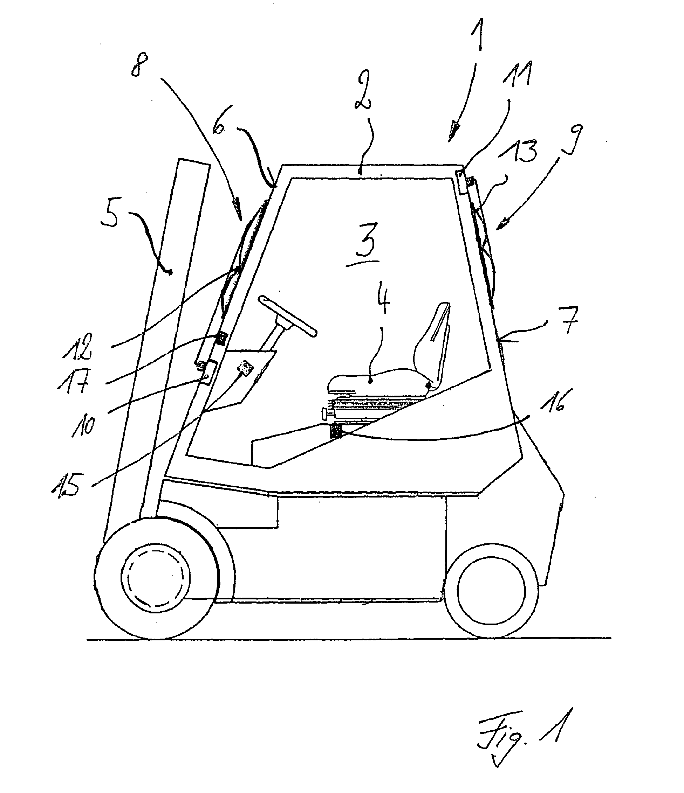

In der Figur 1 ist die Seitenansicht einer erfindungsgemäßen als Flurförderzeug, beispielsweise Gabelstapler, ausgebildeten mobilen Arbeitsmaschine 1 gezeigt. Das Flurförderzeug weist ein als Kabine ausgebildetes Fahrerschutzdach 2 auf, innerhalb dessen ein Fahrerarbeitsplatz 3 gebildet ist. Der Fahrerarbeitsplatz 3 ist mit einem Fahrersitz 4 versehen. Das Fahrerschutzdach 2 weist zum Schutz der Bedienperson vor Witterungseinflüssen in dem einem Hubmast 5 zugewandten Bereich eine Frontscheibe 6 auf. Am gegenüberliegenden Bereich des Fahrerschutzdaches 2 kann eine Heckscheibe 7 vorgesehen sein. Zur Reinigung der Frontscheibe 6 sowie der Heckscheibe 7 kann jeweils eine Scheibenwischeranlage 8, 9 vorgesehen werden. Die Scheibenwischeranlage 8, 9 umfasst jeweils einen Wischermotor 10, 11, der gegebenenfalls unter Zwischenschaltung eines Getriebes, ein Wischerblatt 12, 13 antreibt.

Zur Steuerung der Scheibenwischeranlage 8, 9 ist eine Schaltereinrichtung 15 vorgesehen, mit der die entsprechende Scheibenwischeranlage 8, 9 ein- bzw. ausgeschalten werden kann.

Erfindungsgemäß ist zur Steuerung der Scheibenwischeranlage 8 bzw. 9 ein die Anwesenheit der Bedienperson am Fahrerarbeitsplatz 3 erfassender Anwesenheitssensor 16 vorgesehen. Der Anwesenheitssensor 16 kann beispielsweise als Sitzbelegungssensor oder als Sitzschalter ausgebildet sein. Zudem kann zur Steuerung der Scheibenwischeranlage 8, 9 ein Regensensor 17 vorgesehen werden. Der Regensensor 17 kann an der Frontscheibe 6 oder der Heckscheibe 7 angeordnet werden. Zudem ist es möglich sowohl, an der Frontscheibe 6 als auch an der Heckscheibe 7 einen Regensensor 17 anzuordnen.

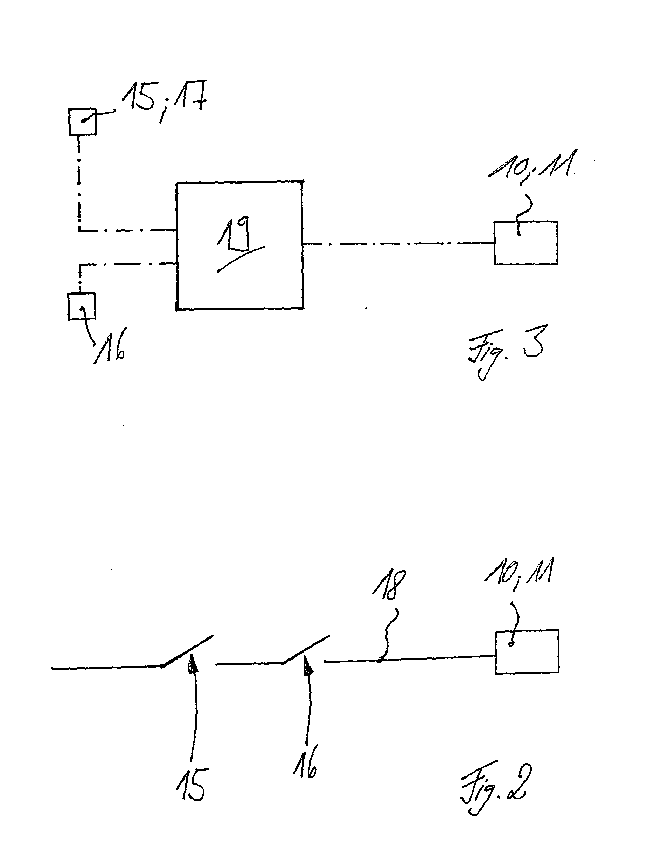

In der Figur 2 ist eine erste Ausführungsform einer erfindungsgemäßen Steuerung der Scheibenwischeranlage 8 bzw. 9 gezeigt. Ein als Sitzschalter ausgebildeter Anwesenheitssensors 16 ist hierbei in Reihe mit der Schaltereinrichtung 15 in einer zu dem Wischermotor 10 bzw. 11 geführten Steuerleitung 18 angeordnet. Hierdurch wird auf einfache Weise erzielt, dass die Scheibenwischeranlage 8, 9 nur betrieben wird, wenn die Schaltereinrichtung 15 eingeschalten und somit geschlossen ist und der als Sitzschalter ausgebildete Anwesenheitssensor 16 bei auf dem Fahrersitz 4 und somit am Fahrerarbeitsplatz 3 befindlicher Bedienperson geschlossen ist.

In der Figur 3 ist eine zweite Ausführungsform einer erfindungsgemäßen Steuerung der Scheibenwischeranlage 8 bzw. 9 dargestellt. Zur Steuerung der Scheibenwischeranlage 8, 9 ist eine Steuereinrichtung 19 vorgesehen, die eingangsseitig mit der Schaltereinrichtung 15 bzw. dem Regensensor 17 und dem Anwesenheitssensor 16 in Wirkverbindung steht. Ausgangsseitig steht die Steuereinrichtung 19 mit dem Wischermotor 10, 11 in Verbindung.

Die Steuereinrichtung 19 ist hierbei derart ausgeführt, dass der Wischermotor 10, 11 und somit die Scheibenwischeranlage 8, 9 nur betätigt wird, wenn einerseits die Schaltereinrichtung 15 betätigt und somit eingeschalten ist bzw. der Regensensor 17 eine nasse Scheibe meldet und gleichzeitig der Anwesenheitssensor 16, beispielsweise ein Sitzbelegungssensor, eine auf dem Fahrersitz 4 und somit am Fahrerarbeitsplatz 3 befindliche Bedienperson meldet.

## Patentansprüche

1. Mobile Arbeitsmaschine, insbesondere Flurförderzeug, mit einem einen Fahrerarbeitsplatz bildenden Fahrerschutzdach, insbesondere Kabine, das mindestens eine Scheibe aufweist, wobei zur Reinigung der Scheibe eine Scheibenwischeranlage vorgesehen ist, **dadurch gekennzeichnet, dass** die Scheibenwischeranlage (8; 9) in Abhängigkeit von einem die Anwesenheit einer Bedienperson am Fahrerarbeitsplatz (3) erfassenden Anwesenheitssensor (16) betreibbar ist.

2. Mobile Arbeitsmaschine nach Anspruch 1, **dadurch gekennzeichnet, dass** die Scheibenwischeranlage (8; 9) in Abhängigkeit von einer Schaltereinrichtung (15) betreibbar ist.

3. Mobile Arbeitsmaschine nach Anspruch 1 oder 2, **dadurch gekennzeichnet, dass** die Scheibenwischeranlage (8; 9) in Abhängigkeit von einem Regensensor (17) betreibbar ist.

4. Mobile Arbeitsmaschine nach einem der Ansprüche 1 bis 3, **dadurch gekennzeichnet, dass** eine Steuereinrichtung (19) zur Steuerung der Scheibenwischeranlage (8; 9) vorgesehen ist, die mit der Schaltereinrichtung (15) und/oder dem Regensensor (17) und/oder dem Anwesenheitssensor (16) in Wirkverbindung steht.

5. Mobile Arbeitsmaschine nach Anspruch 4, **dadurch gekennzeichnet, dass** die Steuereinrichtung (19) derart ausgeführt ist, dass bei einem Einschaltsignal der Schaltereinrichtung (15) und einem die Anwesenheit der Bedienperson am Fahrerarbeitsplatz (3) meldenden Signal des Anwesenheitssensor (16) die Scheibenwischeranlage (8; 9) betreibbar ist.

6. Mobile Arbeitsmaschine nach Anspruch 4, **dadurch gekennzeichnet, dass** die Steuereinrichtung (19) derart ausgeführt ist, dass bei einem die Anwesenheit der Bedienperson am Fahrerarbeitsplatz (3) meldenden Signal des Anwesenheitssensor (16) und einem Feuchtigkeit auf der Scheibe (6; 7) meldenden Signal des Regensensors (17) die Scheibenwischeranlage (8; 9) betreibbar ist.

7. Mobile Arbeitsmaschine nach einem der Ansprüche 1 bis 6, **dadurch gekennzeichnet, dass** der Anwesenheitssensor (16) als ein die Anwesenheit der Bedienperson auf einem Fahrersitz (4) erfassender Sitzbelegungssensor ausgebildet ist.

8. Mobile Arbeitsmaschine nach einem der Ansprüche 1 bis 6, **dadurch gekennzeichnet, dass** der Anwesenheitssensor (16) als Sitzschalter ausgebildet ist.

9. Mobile Arbeitsmaschine nach Anspruch 8, **dadurch gekennzeichnet, dass** der Sitzschalter und die Schaltereinrichtung (15) in Reihe angeordnet sind.
